# EUROPEAN PATENT APPLICATION

(11) **EP 2 369 537 A1**
(43) Date of publication of application: **28.09.2011**
(21) Application number: 11157929.8
(22) Date of filing: 11.03.2011
(51) Int. Cl.: G06Q 10/00

(54) **Address book merging method**

(30) Priority: 12.03.2010 TR 201001910
(71) Applicant: Arti Teknoloji Bora Tayfun Sahinoglu, Ismail Burc Sahinoglu Kollektif Sirketi, 34398 Istanbul (TR)
(72) Inventor: Sahinoglu, Ismail, Burc, 34398, Istanbul (TR)
(74) Representative: Dericioglu, Ekin

(57) **Abstract**

The present invention relates to an address book merging method (100) which enables to merge the records in the address books provided in different electronic sources. The inventive address book merging method (100) determines a score according to the matching ratio by comparing the contact cards with each other, merges the records when the said score is above the upper limit, records the records separately when the score is below the lower limit, and prompts the user for the process to be performed when the score falls between the lower and upper limits. In this method, the records desired to be merged by the user are analyzed and matching templates are generated for use in the future processes.

## Description

### Field of the Invention

The present invention relates to an address book merging method which enables to merge the records in the address books provided in different electronic sources.

### Background of the Invention

Information such as telephone numbers, addresses, e-mail addresses belonging to different people are recorded in the address books in electronic devices. Thus, all information pertaining to the person is grouped under a single title in a single contact card. When the address books in different sources are intended to be merged, the contact cards are directly copied together with the records therein, and the concerned data are not copied only if two records exactly match. For example, if the records of a person named "Emrah Tas" are named as "E. Tas" in one address book and as "Emrah Tas" in another address book, these records are copied and two different contact cards are created for the same person and a confusion occurs in the records within the directory.

The United States patent document no. US6393434 discloses a method and system for synchronizing data that are in different sources. This system generates a synchronization plan determined according to the previous events of the user and enables distribution of the data depending on this plan. The system also provides the user the opportunity of selecting among different synchronization plans.

The United States patent document no. US6073138 discloses a system and method which provides relational patterns between entities. This system provides relational patterns between entities in terms of country, city, office place, surname and similar certain rules. The entities are enabled to be grouped according to the relational patterns provided within this system. Thus, the user can easily reach people located in the same country, city or having the same name.

### Summary of the Invention

The objective of the present invention is to provide an address book merging method which processes the records in the address books in different sources.

Another objective of the present invention is to provide an address book merging method which merges the records in the address books according to the determined rules.

A further objective of the present invention is to provide an address book merging method which generates matching templates by analyzing the merged records.

Another objective of the present invention is to provide an address book merging method which merges the records according to their compliance with the generated matching templates.

### Detailed Description of the Invention

The address book merging method developed to fulfill the objective of the present invention is illustrated in the accompanying figure wherein,

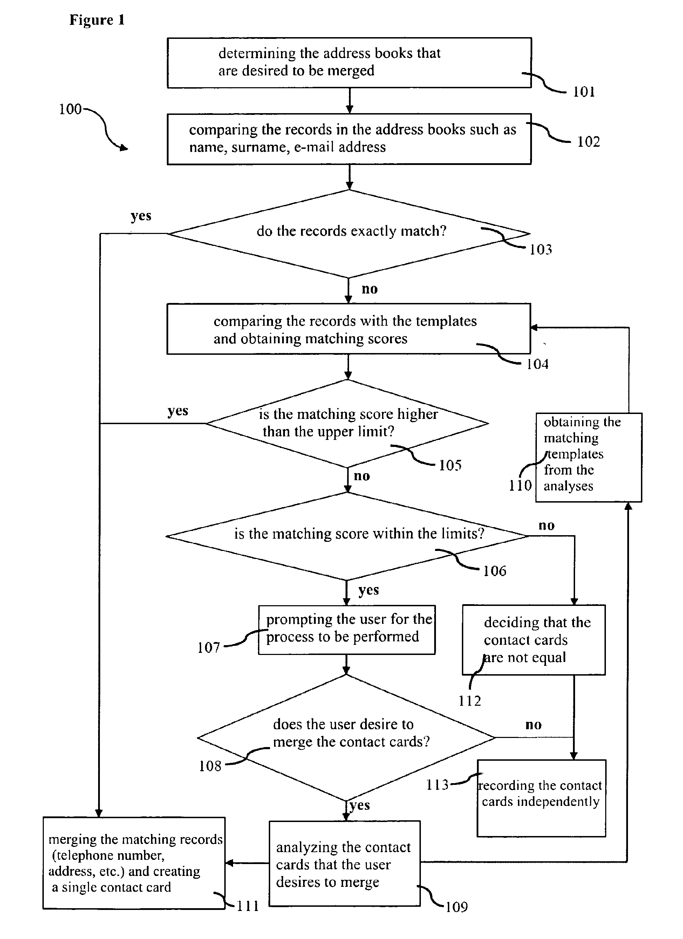

Figure 1 is the flow chart of the inventive method.

The inventive address book merging method (100) comprises the steps of
- determining the address books that are desired to be merged (101),
- comparing the records in the address books such as name, surname, e-mail address (102),
- checking whether the records exactly match (103),
- comparing the records with the matching templates and obtaining matching scores (104),
- comparing the matching score with the predetermined upper limit (105),
- comparing the matching score with the predetermined lower limit (106),
- if the matching score is between the limits, prompting the user for the process to be performed (107),
- the user specifying that s/he desires to merge the contact cards or to record them separately (108),
- analyzing the contact cards that the user desires to merge (109),
- generating matching templates by obtaining the similar aspects of the contact cards from the analyses (110),
- if the records exactly match, the matching score is higher than the upper limit and the user desires to merge the contact cards; merging the matching sub-records (telephone number, address, etc.) and creating a single contact card (111),
- if the matching score is below the lower limit, deciding that the contact cards are not equal (112),
- if the user does not want the records to be merged or if it is decided that the contact cards are not equal, recording the contact cards independently (113).

The address book merging method (100) starts to operate by determining the address books that include the contact cards that are desired to be merged (101). The said address books are included in electronic devices such as computers, mobile phones, PDAs (Personal Digital Assistant), and they contain contact cards including records such as addresses, telephone numbers, names, nicknames, e-mail addresses, etc. belonging to different people. When these contact cards are desired to be merged, the records such as names, e-mail addresses, telephone numbers in one source are compared with the records in the other source (102). Following this comparison, it is checked whether the records exactly match (103). If the records exactly match, the matching sub-records (telephone number, address, etc.) are merged and a single contact card is created (111). If the records do not exactly match, the contact cards are evaluated according to the predetermined matching templates and a matching score is given that shows compliance of the contact cards to each other in these templates (104). This matching score is compared with a predetermined upper limit (105) and if the matching score is above this upper limit, the sub-records are merged whereby a single contact card is created (111). If the matching score is below the upper limit, it is checked whether it is within a predetermined score range (106). If the matching score is within this range, the user is prompted for the process to be performed (107) and it is determined whether the user desires to merge the contact cards (108). When the user desires to merge the contact cards that are in the score range, these merged contact cards are analyzed in terms of their resembling/matching aspects (109). Following the analyses, matching templates are generated for determining the records to be matched in the future, by using various machine learning methods and/or recommendation systems (110). When the user desires to merge the contact cards in the address book manually, apart from the ones prompted to the user, the said contact cards are also analyzed (109). Data obtained from these analyses can be used in generating the templates (110).

Following scoring of the contact cards, the contact cards that receive a score below the predetermined lower limit are assumed to be disparate (112) and these contact cards are recorded independently from each other (113).

It is possible to develop a wide variety of embodiments of the inventive address book merging method (100). The invention cannot be limited to the examples described herein and it is essentially according to the claims.

## Claims

1. An address book merging method (100) **characterized by** the steps of
- determining the address books of different sources that are desired to be merged (101),
- comparing the records in the address books such as name, surname, e-mail address (102),
- checking whether the records exactly match (103),
- comparing the records with the matching templates and obtaining matching scores (104),
- comparing the matching score with the predetermined upper limit (105),
- comparing the matching score with the predetermined lower limit (106),
- if the matching score is between the limits, prompting the user for the process to be performed (107),
- the user specifying that s/he desires to merge the contact cards or to record them separately (108),
- analyzing the contact cards that the user desires to merge (109),
- generating matching templates by obtaining the similar aspects of the contact cards from the analyses (110),
- if the records exactly match, the matching score is higher than the upper limit and the user desires to merge the contact cards; merging the matching sub-records (telephone number, address, etc.) and creating a single contact card (111),
- if the matching score is below the lower limit, deciding that the contact cards are not equal (112),
- if the user does not want the records to be merged or if it is decided that the contact cards are not equal, recording the contact cards independently (113).
